# EUROPÄISCHE PATENTSCHRIFT

(11) **EP 0 960 905 B1**
(45) Veröffentlichungstag und Bekanntmachung des Hinweises auf die Patenterteilung: **26.09.2007**
(21) Anmeldenummer: 98109011.1
(22) Anmeldetag: 18.05.1998
(51) Int. Cl.: C08K 3/00, A63C 5/12

(54) **Kunststoff-Skibelag**
Plastic ski-sole
Semelle de ski en plastique

(43) Veröffentlichungstag der Anmeldung: 01.12.1999
(73) Patentinhaber: IMS KUNSTSTOFF AG, CH-3063 Ittigen-Bern (CH)
(72) Erfinder: Geissbühler, Urs, 3604 Thun (CH)
(74) Vertreter: Hepp, Dieter

(56) Entgegenhaltungen:
- EP-A- 0 821 030
- CH-A- 657 993
- DE-A- 2 825 406
- DATABASE WPI Section Ch, Week 9330 Derwent Publications Ltd., London, GB; Class A86, AN 93-239303 XP002080324 & JP 05 161736 A (NIKKISO CO LTD) , 29. Juni 1993

## Beschreibung

Die Erfindung betrifft einen Kunststoff-Skibelag mit einer Füllstoffmischung zur Verbesserung der Gleiteigenschaften.

Für Kunststoff-Skibeläge werden bevorzugt Materialien mit hydrophobem Charakter eingesetzt, insbesondere Polyethylen.

Der dem Gleiten auf Schnee und Eis bei Skiern, zu denen hier auch "Snowboards" gerechnet werden, zugrundeliegende Gleitvorgang ist komplex und nicht bis in alle Einzelheiten bekannt. Immerhin hat sich gezeigt, dass infolge der Reibung zwischen dem Laufflächenmaterial einerseits und den Schneekristallen anderseits durch die entstehende Reibungswärme Schneekristalle lokal schmelzen und dass das dabei gebildete Wasser zu hydrodynamischen Schmierverhältnissen führt. Dadurch lassen sich die beim Skilaufen gemessenen niedrigen kinetischen Reibungskoeffizienten von etwa 0,02 bis 0,05 erklären. Die bei Festkörperreibung gemessenen kinetischen Reibungskoeffizienten liegen etwa 10 mal höher.

Es ist auch bekannt, dass bei höheren Geschwindigkeiten das lokal gebildete Schmelzwasser sich über die ganze Lauffläche ausbreiten kann, was zu einem unerwünschten und die Gleitgeschwindigkeit negativ beeinflussenden "Saugeffekt" führt. Durch Beimischungen von Materialien, wie zum Beispiel Kohlenstoff in den Modifikationen Russ und/oder Graphit, die gegenüber dem nicht modifizierten Polyethylen höhere Wärmeleitfähigkeiten aufweisen, kann dieser negative Effekt verhindert oder reduziert werden (vgl. z.B. CH-A-657993 oder CH-A-660018).

Das Dokument EP-A-0821030 beschreibt reibungsarme Materialien aus Polyethylen mit Beimischungen von Fluorgraphit der Formel CFₙ, wobei n von 0,5 bis 1,3 variieren kann. Messungen an pressgesinterten Proben aus Polyethylen mit 10 bis 30 % CF gegen Stahl ergaben nach ASTM D3702 kinetische Reibungskoeffizienten von 0,27 bis 0,13, im Vergleich zu 0,35 für Polyethylen gegen Stahl. In EP-A-0821030 wird auch die Verwendung solcher Materialien für Skibeläge vorgeschlagen. Da, wie im vorstehenden erläutert, beim Gleiten von Skiern auf Schnee hydrodynamische Schmierung vorliegt, kann allerdings nicht ohne weiteres angenommen werden, dass Skibeläge aus solchen Materialien beim Gleiten auf Schnee eine verringerte Reibung aufweisen würden. Messungen mit realen Skiern unter Verwendung der in den Beispielen von EP-A-0821030 beschriebenen Materialien aus Polyethylen mit Fluorgraphit als Skibeläge haben gezeigt, dass Fluorgraphit als Additiv in Polyethylen keine signifikante Verringerung der Reibung bzw. Erhöhung der Gleitgeschwindigkeit ergibt.

Ueberraschenderweise ist nun gefunden worden, dass Mischungen von Fluorgraphit mit Russ als Additiv zu Polyethylen die Reibung von Skiern auf Schnee zum Teil markant verringern bzw. die Gleitgeschwindigkeit erhöhen.

Der erfindungsgemässe Kunststoff-Skibelag der eingangs angegebenen Art ist daher dadurch gekennzeichnet, dass die Füllstoffmischung Fluorgraphit und Russ enthält.

Der Kunststoff kann zweckmässig pressgesintertes Kunststoffpulver oder Kunststoffgranulat sein, vorzugsweise aus Polyethylen, insbesondere Niederdruckpolyethylen mit einer Molmasse von 4 bis 12 x 10⁶ g/mol. Er kann auf 100 Gewichtsteile Kunststoff 0,5 bis 10, vorzugsweise 3 bis 8, Gewichtsteile Fluorgraphit und 5 bis 30, vorzugsweise 10 bis 20, Gewichtsteile Russ enthalten. Der Fluorgraphit kann die Formel CFₙ haben, worin n zwischen 0,5 und 1,3 liegt.

### Beispiel

In einer ersten Phase wird eine innige Mischung von 15 Gewichtsteilen Russ mit 20 nm Teilchengrösse und einem Oelbedarf von 500 % und 5 Gewichtsteilen Fluorgraphit hergestellt.

In einer zweiten Phase wird die so hergestellte Mischung von Russ und Fluorgraphit mit 85 Gewichtsteilen des ultrahochmolekularen Niederdruckpolyethylens Hostalen GUR 4170, Molmasse 10,5 x 10⁶ in einem Mischer 15 Minuten lang innig gemischt und hernach in einer zylindrischen Pressform unter bekannten Wärme- und Druckverhältnissen (wie z.B. in der Broschüre von Hoechst zu deren Niederdruckpolyethylen "Hostalen GUR" [Broschüre HKR112-7089C12299/14] angegeben) zu einem homogenen zylindrischen Sinterkörper pressgesintert. Nach dem Abkühlen wird von dem zylindrischen Sinterkörper ein endloses Band in der gewünschten Dicke des Skibelags von z.B. 1,4 mm abgeschält. Der Skibelag wird hernach in bekannter Art und Weise auf einer Seite mit einem Schleifband aufgerauht und durch eine oxidierende Flamme für die Verklebung auf den Skikörper vorbehandelt.

Selbstverständlich kann der Skibelag nicht nur im Pressinterverfahren mit anschliessendem Schälen, sondern zum Beispiel auch im Extrusionsverfahren hergestellt werden. Wesentlich für die Erfindung ist die Beimengung eines Additivs bestehend aus einer Mischung von Russ und Fluorgraphit.

### Vergleichsbeispiel A (nicht erfindungsgemäss)

In Analogie zum Beispiel 1 werden 100 Gewichtsteile des erwähnten Hostalen GUR 4170 mit 5 Gewichtsteilen Fluorgraphit CF in einem Mischer 15 Minuten lang gemischt und wie im Beispiel 1 beschrieben zu einer Skilauffläche verarbeitet.

### Vergleichsbeispiel B (nicht erfindungsgemäss)

In Analogie zum Beispiel 1 werden 85 Gewichtsteile des erwähnten Hostalen GUR-4170 mit 15 Gewichtsteilen Russ (Teilchengrösse 20 nm, Oelbedarf 500 %) in einem Mischer 15 Minuten lang gemischt und wie im Beispiel 1 beschrieben zu einer Skilauffläche verarbeitet.

### Messresultate:

Eine Teststrecke wurde mit konstruktiv identischen Skiern, die sich durch den verwendeten Belag unterscheiden, mit einer mittleren Geschwindigkeit von 100 km/h durchfahren und die dafür benötigte Zeit mittels elektronischer Zeitmessung erfasst. Auf Neuschnee mit einer Temperatur von -3 °C, bei Lufttemperaturen von -2,5 bis - 3,5 °C und Luftfeuchtigkeiten von 70 bis 85 % wurden folgende Zeiten gemessen:

| Lauffläche nach Beispiel | Zusammensetzung der Lauffläche [Gew.-Teile] | Gemessene Zeit | Gleitzeit in % |
|---|---|---|---|
| 1 | PE [85] | 22,862 sec | 93,8 |
| | C [15] | | |
| | CF [5] | | |
| A | PE [100] | 24,380 sec | 100 |
| | CF [5] | | |
| B | PE [85] | 23, 809 sec | 97,7 |
| | C [15] | | |

## Patentansprüche

1. Kunststoff-Skibelag mit einer Füllstoffmischung zur Verbesserung der Gleiteigenschaften, **dadurch gekennzeichnet, dass** die Füllstoffmischung Fluorgraphit und Russ enthält.

2. Kunststoff-Skibelag nach Anspruch 1, **dadurch gekennzeichnet, dass** der Kunststoff pressgesintertes Kunststoffpulver oder Kunststoffgranulat ist.

3. Kunststoff-Skibelag nach Anspruch 1 oder 2, **dadurch gekennzeichnet, dass** der Kunststoff Polyethylen ist, vorzugsweise Niederdruckpolyethylen.

4. Kunststoff-Skibelag nach Anspruch 3, **dadurch gekennzeichnet, dass** der Kunststoff Niederdruckpolyethylen mit einer Molmasse von 4 bis 12 x 10⁶ g/mol ist.

5. Kunststoff-Skibelag nach einem der Ansprüche 1 bis 4, **dadurch gekennzeichnet, dass** er auf 100 Gewichtsteile Kunststoff 0,5 bis 10, vorzugsweise 3 bis 8, Gewichtsteile Fluorgraphit und 5 bis 30, vorzugsweise 10 bis 20, Gewichtsteile Russ enthält.

6. Kunststoff-Skibelag nach einem der Ansprüche 1 bis 5, **dadurch gekennzeichnet, dass** der Fluorgraphit die Formel CFₙ hat, in welcher n zwischen 0,5 und 1,3 liegt.

## Claims

1. Plastic ski coating with a filling material mixture for improving the sliding characteristics, **characterised in that** the filling material mixture contains fluorographite and soot.

2. Plastic ski coating according to Claim 1, **characterised in that** the plastic is a press-sintered plastic powder or plastic granulate.

3. Plastic ski coating according to Claim 1 or 2, **characterised in that** the plastic is polyethylene, preferably low-pressure polyethylene.

4. Plastic ski coating according to Claim 3, **characterised in that** the plastic is low-pressure polyethylene with a molar mass of 4 to 12 × 10⁶ g/mol.

5. Plastic ski coating according to one of Claims 1 to 4, **characterised in that** for 100 parts by weight of plastic it contains 0.5 to 10, preferably 3 to 8, parts by weight of fluorographite and 5 to 30, preferably 10 to 20, parts by weight of soot.

6. Plastic ski coating according to one of Claims 1 to 5, **characterised in that** the fluorographite has the formula CF*ₙ*, wherein n lies between 0.5 and 1.3.

## Revendications

1. Semelle de ski en matière plastique, contenant un mélange de matières de charge pour améliorer les propriétés de glisse, **caractérisée en ce que** le mélange de matières de charge contient du graphite fluoré et du noir de carbone.

2. Semelle de ski en matière plastique selon la revendication 1, **caractérisée en ce que** la matière plastique est une poudre de matière plastique frittée sous pression ou un granulé de matière plastique.

3. Semelle de ski en matière plastique selon la revendic ation 1 ou 2, caract érisée en ce que la matière plastique est un polyéthylène, de préférence un polyéthylène basse pression.

4. Semelle de ski en matière plastique selon la revendication 3, **caractérisée en ce que** la matière plastique est un polyéthylène basse pression ayant une masse moléculaire de 4 à 12 x 10⁶ g/mol.

5. Semelle de ski en matière plastique selon l'une des revendications 1 à 4, **caractérisée en ce qu'**elle contient, pour 100 parties en poids de matière plastique, 0,5 à 10, de préférence 3 à 8 parties en poids de graphite fluoré, et 5 à 30, de préférence 10 à 20 parties en poids de noir de carbone.

6. Semelle de ski en matière plastique selon l'une des revendications 1 à 5, **caractérisée en ce que** le graphite fluoré a la formule CFₙ, dans laquelle n est compris entre 0,5 et 1,3.
